# EUROPÄISCHE PATENTANMELDUNG

(11) **EP 1 510 678 A1**
(43) Veröffentlichungstag der Anmeldung: **02.03.2005**
(21) Anmeldenummer: 04018421.0
(22) Anmeldetag: 04.08.2004
(51) Int. Cl.: F02D 35/00, F02D 41/34, F02D 41/40, F02D 19/06, F02M 21/02

(54) **Einspritzsystem für Ottomotoren**

(30) Priorität: 22.08.2003 DE 10338631
(71) Anmelder: Zimmermann, Olaf, 58239 Schwerte (DE)
(72) Erfinder: Zimmermann, Olaf, 58239 Schwerte (DE)
(74) Vertreter: Köchling, Conrad-Joachim, Dipl.-Ing.

(57) **Zusammenfassung**

Um ein Einspritzsystem für Otto-Motoren mit einem für das Benzineinspritzsystem ausgelegten elektronischen Steuergerät, welches Ausgangssignale für Benzineinspritzdüsen zur Verfügung stellt, insbesondere für den Öffnungszeitpunkt und die Öffnungszeitdauer, wobei alternativ bei Benzinbetrieb nur die Benzineinspritzdüsen oder bei Gasbetrieb nur die Gaseinspritzdüsen mittels der Ausgangssignale gesteuert werden, zu schaffen, welches mit geringem Einsatz an zusätzlichen Komponenten eine einfache, schnelle und präzise Steuerung der Gaseinspritzdüsen unter Weiterverwendung der für die Benzineinspritzung erforderlichen Motorsteuerung gewährleistet, wird vorgeschlagen, dass bei Gasbetrieb mittels eines in das elektronische Steuergerät integrierten Schaltkreises oder vorzugsweise durch einen seriell zwischen das elektronische Steuergerät und die Gaseinspritzdüsen geschalteten Mikrocontroller aus den Ausgangssignalen des elektronischen Steuergerätes nur das Signal für den Öffnungszeitpunkt der Benzineinspritzdüsen ausgelesen und als Eingangssignal für den Schaltkreis oder den Microcontroller abgeleitet wird, wobei der Schaltkreis oder der Microcontroller dieses Signal als Ausgangssignal zur Verfügung stellt und mittels dieses Ausgangssignals die Gaseinspritzdüsen gesteuert werden.

## Beschreibung

Die Erfindung betrifft ein Einspritzsystem für Otto-Motoren mit einem für ein Benzineinspritzsystem ausgelegten elektronischen Steuergerät, welches Ausgangssignale für Benzineinspritzdüsen zur Verfügung stellt, insbesondere für den Öffnungszeitpunkt und die Öffnungszeitdauer, wobei alternativ bei Benzinbetrieb nur die Benzineinspritzdüsen oder bei Gasbetrieb nur die Gaseinspritzdüsen mittels der Ausgangssignale gesteuert werden.

Aus der Praxis sind Einspritzsysteme für Otto-Motoren bekannt, die für eine alternative Betriebsweise mit Benzineinspritzdüsen oder Gaseinspritzdüsen bestimmt sind.

Bei einem ersten bekannten Einspritzsystem dieser Art ist der Aufbau so vorgenommen, dass neben der Motorsteuerelektronik für Benzinbetrieb eine zweite komplette Motorsteuerelektronik für Gasbetrieb vorzusehen ist. Dies bedeutet einen hohen materiellen Aufwand, wobei insbesondere Probleme dabei auftreten, die hohen Anforderungen der Euroabgasnormen, insbesondere Euro 4, auch für Gasbetrieb sicherzustellen.

Um den materiellen Aufwand zu vermindern, ist es auch schon bekannt, lediglich die Motorsteuerelektronik für Benzinbetrieb zu nutzen, wobei diese so ausgestattet ist, dass auch beim Umschalten auf Gasbetrieb eine entsprechende Motorcharakteristik und Abgasqualität erreicht werden soll. Bei diesem Einspritzsystem erfolgt bei Gasbetrieb eine Umrechnung der Steuergrößen für Motorsteuerelektronik über mehrere Parameter, insbesondere ein Kennfeld, in Steuerdaten, die für die Steuerung der Gasdüsen erforderlich sind. Hierbei werden u. a. auch die Zeitpunkte und die Zeitdauer der Benzineinspritzimpulse berücksichtigt. Der Nachteil einer solchen Lösung ist die Zeitdauer der Berechnung, die aufgrund der vielen Rechenvorgänge zu einer Verzögerung und damit zu einer verzögerten Umsetzung der Signale führt, wobei zudem nicht Einzelsignale, sondern Signalpakete erfasst und als Durchschnittswerte gemessen werden. Aus diesen Durchschnittswerten wird dann die Steuerung für den Gasbetrieb abgeleitet. Resultat ist aber keine exakte Steuerung und Regelung, so dass das Abgasverhalten nicht dem hohen Normstandard entspricht.

Ausgehend von diesem Stand der Technik liegt der Erfindung die Aufgabe zugrunde, ein Einspritzsystem gattungsgemäßer Art zu schaffen, welches mit geringem Einsatz an zusätzlichen Komponenten eine äußerst einfache, schnelle und präzise Steuerung der Gaseinspritzdüsen unter Weiterverwendung der für die Benzineinspritzung erforderlichen Motorsteuerung gewährleistet, wobei der hohe Stand der Abgasnorm, insbesondere auch die Euro 4, erreichbar ist.

Zur Lösung dieser Aufgabe schlägt die Erfindung vor, dass bei Gasbetrieb mittels eines in das elektronische Steuergerät integrierten Schaltkreises oder vorzugsweise durch einen seriell zwischen das elektronische Steuergerät und die Gaseinspritzdüsen geschalteten Mikrocontroller aus den Ausgangssignalen des elektronischen Steuergerätes nur das Signal für den Öffnungszeitpunkt der Benzineinspritzdüsen ausgelesen und als Eingangssignal für den Schaltkreis oder den Microcontroller abgeleitet wird, wobei der Schaltkreis oder der Microkontroller dieses Signal als Ausgangssignal zur Verfügung stellt und mittels dieses Ausgangssignals die Gaseinspritzdüsen gesteuert werden.

Bevorzugt ist vorgesehen, dass die Öffnungszeitdauer der Gaseinspritzdüsen empirisch durch Messung des Abgases des Otto-Motors erfasst wird und als Konstante in einem elektronischen Speicher des integrierten Schaltkreises oder des Mikrocontrollers abgelegt wird, wobei mittels des integrierten Schaltkreises oder des Microcontrollers die Öffnungszeitdauer der jeweils geöffneten Gaseinspritzdüse gesteuert wird.

Alternativ kann auch vorgesehen sein, dass die Öffnungszeitdauer der Gaseinspritzdüsen dadurch festgelegt ist, dass das Signal des elektronischen Steuergerätes erfasst wird, welches die Öffnungszeitdauer der Benzineinspritzdüse bestimmt, dieses Signal als Eingangssignal in den integrierten Schaltkreis oder den Microkontroller eingespeist wird, durch diesen entsprechend einem einstellbaren Vergleichswert, zum Beispiel einem Prozentsatz, umgerechnet wird und die so errechnete Zeitdauer als Steuersignal für die Öffnungszeitdauer der Gaseinspritzdüse ausgegeben wird.

Zudem ist bevorzugt vorgesehen, dass der Öffnungszeitpunkt der Benzineinspritzdüsen erfasst und sofort oder mit einem Zeitverzug von wenigen Millisekunden, zum Beispiel max. 20 Millisekunden, von dem integrierten Schaltkreis oder dem Microcontroller verarbeitet und als Steuersignal für die Gaseinspritzdüse zur Verfügung gestellt wird.

Eine bevorzugte Weiterbildung wird darin gesehen, dass zwischen das elektronische Steuergerät und die von diesen gesteuerten Benzineinspritzdüsen ein Umschalter eingeschaltet ist, der in einer ersten Schaltstellung den Steuersignalweg vom Steuergerät zu den Benzineinspritzdüsen öffnet und in einer zweiten Schaltstellung einen alternativen Steuersignalweg vom Steuergerät über den Microcontroller zu den Gaseinspritzdüsen öffnet.

Zudem ist bevorzugt vorgesehen, dass die Gaseinspritzdüsen jeweils im zu den Motoreinlassventilen führenden Ansaugkrümmer angeordnet sind.

Dabei ist bevorzugt, dass die Gaseinspritzdüsen im jeweiligen Saugrohr des Motors quer zur Saugrichtung angeordnete Düsenrohre aufweisen, deren Düsenauslassöffnungen etwa parallel zur Saugrichtung ausgerichtet sind.

Durch die erfindungsgemäße Lösung wird ein Einspritzsystem zur Verfügung gestellt, welches sowohl für Benzinbetrieb als auch für Gasbetrieb geeignet und bestimmt ist, wobei die Umschaltung in einfacher Weise beispielsweise von einem am Armaturenbrett des Fahrzeuges angeordneten Umschalter erfolgen kann.

Die serienmäßige Motorsteuerelektronik erzeugt Signale bezüglich der Zeitpunkte und Zeitdauer, zu denen normalerweise Benzin eingespritzt wird. Durch einen zusätzlichen in das elektronische Motorsteuer-elektronikgerät integrierten Schaltkreis oder vorzugsweise durch einen zusätzlichen Microcontroller, der ebenso wie der integrierte Schaltkreis nur bei Umschaltung auf Gasbetrieb mit der Motorelektronik verknüpft ist, wird der exakte Zeitpunkt erfasst, zudem die Motorsteuerelektronik ein Signal zur Öffnung einer Benzineinspritzdüse abgibt. Dieses Signal wird zeitgleich oder maximal mit einem Versatz von ca. 20 Millisekunden übernommen und als Ausgangssignal für die Öffnung der Gaseinspritzdüse bei Gasbetrieb abgeleitet. Die Dauer der Gaseinspritzimpulse kann empirisch dadurch festgelegt werden, dass bei Gasbetrieb bei der Erstinstallation eine Abgasmessung erfolgt und entsprechend bei entsprechender Qualität des Abgases die Öffnungszeitdauer der jeweils geöffneten Gaseinspritzdüse bestimmt wird und als Konstante in dem elektronischen Speicher des integrierten Schaltkreises oder des Mikrocontrollers abgelegt wird. Alternativ kann auch die Zeitdauer der Öffnung der Gaseinspritzdüse dadurch festgelegt werden, dass das entsprechende für Benzinbetrieb dienende Signal von der Motorsteuerelektronik erfasst wird und dieser Wert von dieser entsprechend einem einstellbaren Vergleichswert, beispielsweise einem Prozentsatz, umgerechnet wird. Die in dieser Weise mittels des integrierten Schaltkreises oder des Microcontrollers errechnete Zeitdauer wird als Steuersignal für die Öffnungszeitdauer der Gaseinspritzdüse aufgegeben.

Die erfindungsgemäße Ausbildung ermöglicht eine praktisch lineare Umsetzung der von der Motorsteuer-elektronik ausgegebenen Signale, auch bei Gasbetrieb. Bei einer praktischen Anwendung des erfindungsgemäßen Einspritzsystems erfolgt der Anschluss des zusätzlichen Steuergerätes, mittels dessen die Gaseinspritzdüsen betätigt werden, im so genannten TI-Anschluss der Motorsteuerelektronik. Über ein Y-Kabel kann eine Abzweigung gebildet werden, die alternativ, durch den Umschalter betätigt, entweder die Signale zu den Benzineinspritzdüsen führt oder aber vorzugsweise über den zusätzlichen Microcontroller zu den Gaseinspritzdüsen.

Besonderer Vorteil des erfindungsgemäßen Einspritzsystems ist nicht nur die Simplizität und der hohe Effekt der damit zu erreichen ist, insbesondere auch hinsichtlich des Abgasverhaltens, sondern ein wesentlicher Vorteil liegt auch darin, dass praktisch die Nachrüstung bei einem Einspritzsystem für Otto-Motoren in einfacher Weise von jedem Fachbetrieb durchgeführt werden kann, der Abgasuntersuchungen qualifiziert durchführen kann.

Insbesondere auch die Einstellung des Einspritzsystems auf den individuellen Motor ist in einfacher Weise durch Abgasmessung von einem zur Abgasuntersuchung qualifizierten Betrieb durchzuführen.

Die Erfindung ist im Rahmen der Offenbarung vielfach variabel.

Alle in der Beschreibung und/oder den Ansprüchen angegebenen Merkmale werden als erfindungswesentlich angesehen.

## Patentansprüche

1. Einspritzsystem für Otto-Motoren mit einem für das Benzineinspritzsystem ausgelegten elektronischen Steuergerät, welches Ausgangssignale für Benzineinspritzdüsen zur Verfügung stellt, insbesondere für den Öffnungszeitpunkt und die Öffnungszeitdauer, wobei alternativ bei Benzinbetrieb nur die Benzineinspritzdüsen oder bei Gasbetrieb nur die Gaseinspritzdüsen mittels der Ausgangssignale gesteuert werden, **dadurch gekennzeichnet, dass** bei Gasbetrieb mittels eines in das elektronische Steuergerät integrierten Schaltkreises oder vorzugsweise durch einen seriell zwischen das elektronische Steuergerät und die Gaseinspritzdüsen geschalteten Mikrocontroller aus den Ausgangssignalen des elektronischen Steuergerätes nur das Signal für den Öffnungszeitpunkt der Benzineinspritzdüsen ausgelesen und als Eingangssignal für den Schaltkreis oder den Microcontroller abgeleitet wird, wobei der Schaltkreis oder der Microcontroller dieses Signal als Ausgangssignal zur Verfügung stellt und mittels dieses Ausgangssignals die Gaseinspritzdüsen gesteuert werden.

2. Einspritzsystem nach Anspruch 1, **dadurch gekennzeichnet, dass** die Öffnungszeitdauer der Gaseinspritzdüsen empirisch durch Messung des Abgases des Otto-Motors erfasst wird und als Konstante in einem elektronischen Speicher des integrierten Schaltkreises oder des Microcontrollers abgelegt wird, wobei mittels des integrierten Schaltkreises oder des Microcontrollers die Öffnungszeitdauer der jeweils geöffneten Gaseinspritzdüse gesteuert wird.

3. Einspritzsystem nach Anspruch 1, **dadurch gekennzeichnet, dass** die Öffnungszeitdauer der Gaseinspritzdüsen dadurch festgelegt ist, dass das Signal des elektronischen Steuergerätes erfasst wird, welches die Öffnungszeitdauer der Benzineinspritzdüse bestimmt, dieses Signal als Eingangssignal in den integrierten Schaltkreis oder den Microkontroller eingespeist wird, von diesen entsprechend einem einstellbaren Vergleichswert, zum Beispiel einem Prozentsatz, umgerechnet wird und die so errechnete Zeitdauer als Steuersignal für die Öffnungszeitdauer der Gaseinspritzdüse ausgegeben wird.

4. Einspritzsystem nach einem der Ansprüche 1 bis 3, **dadurch gekennzeichnet, dass** jeder Öffnungszeitpunkt der Benzineinspritzdüsen erfasst und sofort oder mit einem Zeitverzug von wenigen Millisekunden, zum Beispiel max. 20 Millisekunden, von dem integrierten Schaltkreis oder dem Microcontroller verarbeitet und als Steuersignal für die Gaseinspritzdüsen zur Verfügung gestellt wird.

5. Einspritzsystem nach einem der Ansprüche 1 bis 4, **dadurch gekennzeichnet, dass** zwischen das elektronische Steuergerät und die von diesem gesteuerten Benzineinspritzdüsen ein Umschalter eingeschaltet ist, der in einer ersten Schaltstellung den Steuersignalweg vom Steuergerät zu den Benzineinspritzdüsen öffnet und in einer zweiten Schaltstellung einen alternativen Steuersignalweg vom Steuergerät über den Microcontroller zu den Gaseinspritzdüsen öffnet.

6. Einspritzsystem nach einem der Ansprüche 1 bis 5, **dadurch gekennzeichnet, dass** die Gaseinspritzdüsen jeweils im zu den Motoreinlassventilen führenden Ansaugkrümmer angeordnet sind.

7. Einspritzsystem nach Anspruch 6, **dadurch gekennzeichnet, dass** die Gaseinspritzdüsen im jeweiligen Saugrohr des Motors quer zur Saugrichtung angeordnete Düsenrohre aufweisen, deren Düsenauslassöffnungen etwa parallel zur Saugrichtung ausgerichtet sind.
